# DEMANDE DE BREVET EUROPEEN

(11) **EP 2 220 941 A1**
(43) Date de publication de la demande: **25.08.2010**
(21) Numéro de dépôt: 10360003.7
(22) Date de dépôt: 17.02.2010
(51) Int. Cl.: A21C 11/12

(54) **Machine de scarification de pâtons de pain ou similaires**

(30) Priorité: 18.02.2009 FR 0951039
(71) Demandeur: Scaritech S.A.S., 90000 Belfort (FR)
(72) Inventeur: Reichert, Gérard, 90300 Vetrigne (FR)
(74) Mandataire: Nithardt, Roland

(57) **Abrégé**

La présente invention concerne une machine de scarification (1) de pâtons de pain comportant des outils de coupe portés par un support d'outils (3) disposé sur un châssis au dessus d'une zone de réception de pâtons à scarifier, les outils de coupe (2) étant portés chacun par un porte-outil (6) mobile en rotation par rapport au support d'outils (3) autour d'un premier axe de rotation (A1) perpendiculaire à la zone de réception pour modifier l'angle de coupe des outils de coupe (2) par rapport au pâton à scarifier. Les porte-outils (6) sont chacun mobiles en rotation par rapport au support d'outils (3) autour d'un deuxième axe de rotation (A2) parallèle à la zone de réception, sécant au premier axe de rotation (A1), et couplé à des moyens d'entraînement (E4) pour modifier l'inclinaison des outil de coupe (2) par rapport au pâton à scarifier.

## Description

### Domaine technique:

La présente invention concerne une machine de scarification de pâtons de pain ou similaires, comportant au moins un outil de coupe porté par un support d'outils disposé sur un châssis au dessus d'une zone de réception d'au moins un pâton à scarifier, l'un au moins dudit dispositif ou de ladite zone étant déplacé par rapport à l'autre pour effectuer la scarification dudit pâton, ledit outil de coupe étant porté par un porte-outil, lequel est mobile en rotation par rapport audit support d'outils autour d'un premier axe de rotation perpendiculaire à la zone de réception et couplé à des troisièmes moyens d'entraînement agencés pour modifier l'angle de coupe dudit outil de coupe par rapport au pâton à scarifier disposé sur ladite zone de réception.

### Technique antérieure :

La fabrication de pains et/ou de viennoiseries nécessite de scarifier le dessus des boules de pâte appelées des pâtons avant la cuisson pour former après cuisson une belle croute dorée. De la régularité et de la profondeur des entailles effectuées dans le pain dépendent la qualité de la cuisson et l'esthétique du pain ou de la viennoiserie. L'opération de scarification est habituellement effectuée manuellement par les artisans boulangers à l'aide d'outils de scarification adaptés dans le cadre d'une fabrication artisanale. On trouve aujourd'hui des laboratoires de production semi-industrielle du pain qui se sont développés pour approvisionner plusieurs dizaines de magasins, ainsi que des grosses boulangeries notamment en hyper et supermarchés. Le gros débit de ces unités de production nécessite la mécanisation de la scarification pour suivre les cadences de production et soulager l'opérateur chargé de la scarification. Mais les dispositifs de scarification connus ne sont pas réglables automatiquement dans le but d'adapter le type de scarification au type de pain et ne permettent pas d'obtenir une qualité de scarification comparable à celle effectuée par un artisan boulanger car, en mode automatique, la trajectoire de l'outil de scarification s'effectue toujours dans un plan parallèle aux pâtons quel que soit le profil du pâton. Il existe également des processus de fabrication industrielle du pain dans lesquels l'opération de scarification est effectuée par des dispositifs de scarification montés sur des lignes de fabrication automatique capable d'atteindre des cadences très élevées. La fabrication industrielle du pain est généralement destinée à un type de pain standard, tel que la baguette, qui impose un type de scarification déterminé, par exemple cinq entailles en biais. De fait, les dispositifs de scarification connus ne sont pas conçus pour s'adapter à des pains plus spécifiques, tels que la miche, la boule, le pain long, etc. qui nécessitent d'autres types de scarification, par exemple des entailles croisées, en chevrons, droites, etc.

La publication EP 0 682 871 B1 décrit un dispositif de scarification dans lequel les plaques portant les pâtons sont déplacées en diagonal sous des lames de coupe fixes dont l'orientation n'est pas réglable. La publication EP 0 804 879 A1 décrit un dispositif de scarification dans lequel les plaques défilent sous une rangée de lames à rasoir animées d'un mouvement de translation perpendiculaire au sens de défilement des plaques pour effectuer des entailles en biais. La publication FR 2 773 436 décrit une machine de scarification comportant un bras porteur d'au moins une lame qui est animé d'un mouvement de translation alternative de sorte à s'étendre entre les plaques superposées dans un chariot pour scarifier les pâtons disposés sur chacune des plaques. Dans ces exemples, l'orientation, l'inclinaison et la profondeur de coupe des outils de coupe ne sont pas réglables automatiquement et ne permettent pas de modifier à souhait les paramètres de la scarification.

D'autres solutions prévoient un réglage de l'outil de coupe. Dans la publication DE 10 2005 056 888 A1, l'outil de coupe est mobile en translation le long des axes Y et Z et en rotation autour de l'axe Z par rapport aux pâtons portés par un tapis transporteur. Dans la publication EP 0 202 181 A, les outils de coupe sont mobiles en translation dans un plan parallèle au tapis transporteur portant les pâtons à scarifier. Et dans la publication EP 0 341 599 A, les outils de coupe sont réglables en hauteur par rapport au tapis transporteur portant les pâtons à scarifier. Aucune solution ne propose le réglage de tous les paramètres de positionnement de l'outil de coupe par rapport aux pâtons en vue de les ajuster au type de pâtons à scarifier et au type de scarification souhaité, et notamment l'inclinaison des outils de coupe.

### Exposé de l'invention :

La présente invention vise à apporter une solution aux problèmes évoqués ci-dessus en proposant une machine de scarification simple, fiable, économique, polyvalente et automatique permettant de réaliser des entailles de qualité régulière et reproductible, et de pouvoir modifier à souhait les paramètres de scarification afin de pouvoir scarifier tout type de pâtons de pain ou de viennoiserie, aussi bien dans une fabrication semi-industrielle qu'industrielle.

Dans ce but, invention concerne une machine de scarification du genre indiqué en préambule, **caractérisée en ce que** ledit porte-outil est mobile en rotation par rapport audit support d'outils autour d'un deuxième axe de rotation parallèle à la zone de réception, sécant audit premier axe de rotation, et couplé à des quatrièmes moyens d'entraînement agencés pour modifier l'inclinaison de l'outil de coupe par rapport au pâton à scarifier disposé sur la zone de réception.

Dans une première forme de réalisation, la machine comporte au moins un râtelier d'alimentation disposé devant ledit châssis et portant plusieurs plateaux superposés, ainsi que des moyens de préhension pour déplacer chaque plateau individuellement dudit râtelier d'alimentation sous ledit support d'outils pour effectuer la scarification desdits pâtons, chaque plateau formant ladite zone de réception. Dans cette construction, le support d'outils est amené à la hauteur des plateaux et la scarification s'effectue automatique par le déplacement horizontal du plateau.

Dans une seconde forme de réalisation, ladite zone de réception est constituée d'au moins une bande transporteuse portant lesdits pâtons à scarifier et traversant ladite machine sous ledit support d'outils pour effectuer la scarification desdits pâtons. Dans cette construction, le support d'outils peut suivre automatiquement le profil des pâtons à scarifier.

De manière préférentielle, le support d'outils est mobile en translation verticale par rapport au châssis et couplé à des premiers moyens d'entraînement agencés pour déplacer le support d'outils en hauteur par rapport à la zone de réception des pâtons à scarifier.

Dans ce cas, la machine de scarification comporte avantageusement un chariot ascenseur portant ledit support d'outils et les premiers moyens d'entraînement comportent au moins un actionneur porté par le châssis ou le chariot ascenseur et couplé en rotation à une vis sans fin engrenant un palier fileté solidaire du chariot ascenseur ou du châssis, l'extrémité de la vis sans fin étant en prise avec le support d'outils.

La machine de scarification peut comporter un chariot transversal monté sur le chariot ascenseur et portant ledit support d'outils, mobile transversalement par rapport au châssis et couplé à des deuxièmes moyens d'entraînement pour déplacer ledit outil de coupe perpendiculairement au déplacement relatif de la zone de réception.

Dans une forme de réalisation préférée, la machine comporte plusieurs outils de coupe, chacun monté sur un porte-outil et lesdits troisièmes et/ou quatrièmes moyens d'entraînement sont communs auxdits porte-outils, ces porte-outils étant disposés parallèlement entre eux et distants d'un pas prédéterminé.

Les outils de coupe peuvent être mobiles en rotation autour de leur axe central passant par le deuxième axe de rotation, chaque outil de coupe étant monté dans une douille libre en rotation dans un manchon du porte-outil, ladite douille comportant un talon excentré agencé pour coopérer avec une came solidaire dudit organe de réglage dans une position extrême des troisièmes moyens d'entraînement, permettant ainsi le réglage de l'angle d'attaque des outils de coupe.

Le support d'outils peut être mobile en translation verticale par rapport au chariot transversal et couplé à des cinquièmes moyens d'entraînement agencés pour modifier la hauteur desdits outils de coupe par rapport à ladite zone de réception des pâtons à scarifier.

Dans la première forme de réalisation, les moyens de préhension comportent au moins un organe de préhension mobile en translation horizontale par rapport audit chariot ascenseur et couplé à des sixièmes moyens d'entraînement agencés pour déplacer chaque plateau individuellement entre une position rentrée dans laquelle il est dans le râtelier d'alimentation et une position sortie dans laquelle il est dans la machine de scarification et inversement.

Les actionneurs des différents moyens d'entraînement sont avantageusement pilotés par une unité de commande programmable permettant de combiner les déplacements des outils de coupe en fonction des entailles à réaliser et du type de pâton à scarifier.

### Description sommaire des dessins :

La présente invention et ses avantages apparaîtront mieux dans la description suivante de deux modes de réalisation donnés à titre d'exemples non limitatifs, en référence aux dessins annexés, dans lesquels :
- la figure 1 est une vue en perspective d'une machine de scarification selon l'invention alimentée par des plaques portant des pâtons à scarifier, et correspondant à une application semi-industrielle,
- la figure 2 est une vue de côté de la machine de la figure 1,
- la figure 3 est une vue en perspective du chariot de la machine de la figure 1,
- la figure 4 est une vue de dessus du chariot de la figure 3,
- la figure 5 est une vue de côté du chariot de la figure 3,
- la figure 6 est une vue en perspective de l'organe de préhension prévu sur le chariot de la figure 3,
- la figure 7 est une vue en perspective de la partie coupe de la machine de la figure 1,
- la figure 8 est une vue de face de la partie coupe de la figure 7,
- la figure 9 est une vue en coupe de la partie coupe selon le plan IX-IX de la figure 8,
- la figure 10 est une vue en coupe d'une variante de la partie coupe selon le plan X-X de la figure 8,
- la figure 11 est une vue en coupe d'un détail de la partie coupe selon le plan XI-XI de la figure 9,
- la figure 12 est une vue en perspective d'une machine de scarification selon l'invention traversée par une bande transporteuse portant des pâtons à scarifier, et correspondant à une application industrielle,
- la figure 13 est une vue agrandie du détail XIII de la figure 12, et
- les figures 14A et 14B sont des vues respectivement de face et de profil d'un outil de coupe.

### Illustrations de l'invention et différentes manières de la réaliser :

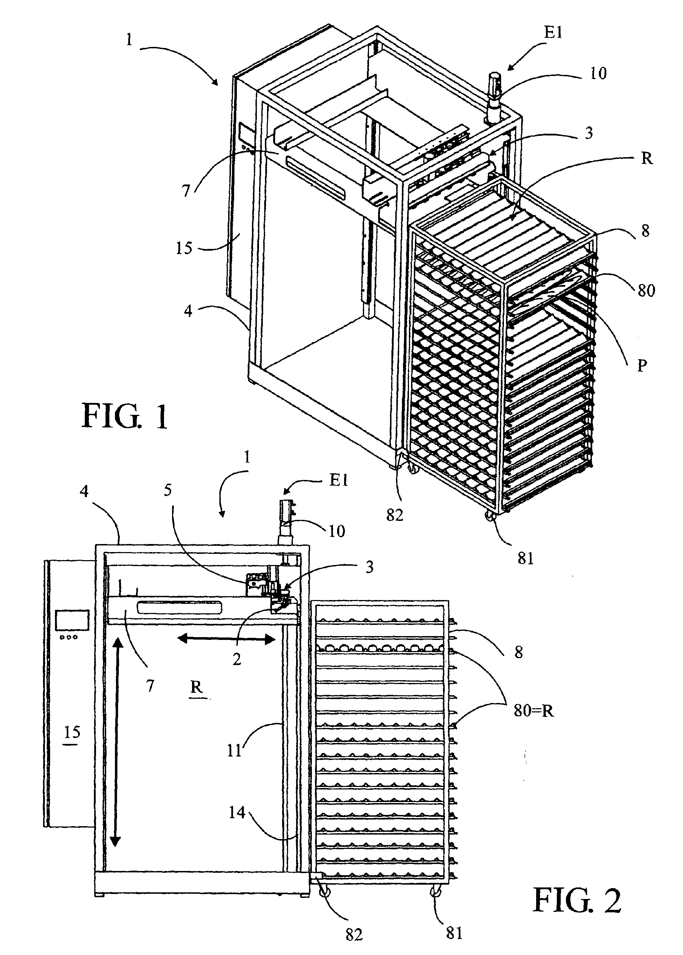

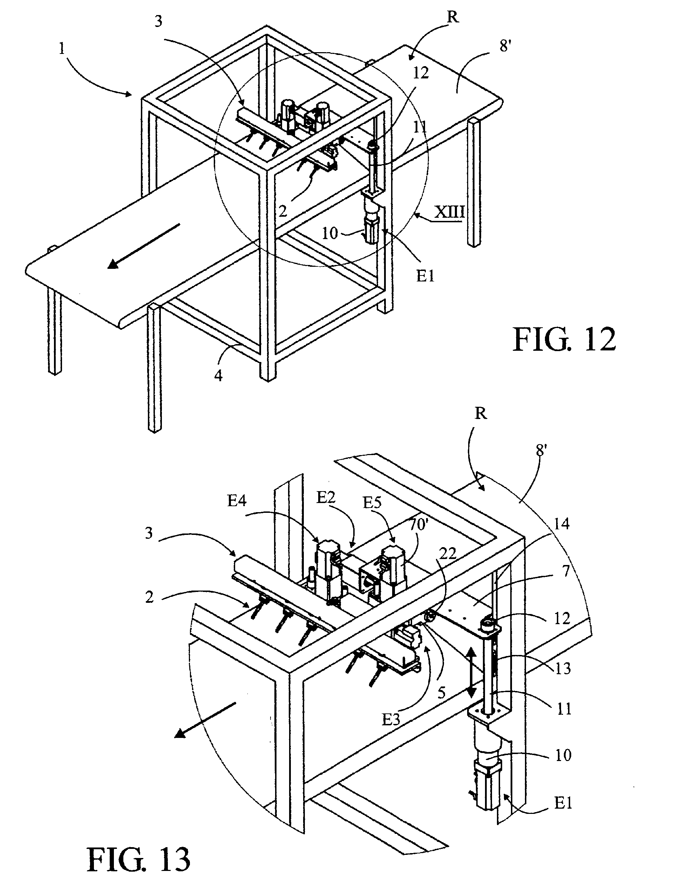

La machine de scarification 1 selon l'invention est destinée à scarifier des pâtons de pain P pour la fabrication du pain selon un processus soit semi-industriel (cf. fig. 1 et 2), soit industrielle (cf. fig. 12 et 13). Elle comporte au moins un outil de coupe 2 et dans les exemples représentés plusieurs outils de coupe 2, portés par un support d'outils 3 disposé sur un châssis 4 au dessus d'une zone de réception R des pâtons P à scarifier, l'un au moins du support d'outils 3 ou de la zone de réception R étant déplacé par rapport à l'autre pour effectuer la scarification des pâtons.

Dans l'application semi-industrielle (cf. fig. 1 et 2), la zone de réception R est constituée de plateaux 80 recevant les pâtons P à scarifier dans des alvéoles, les plateaux et les pâtons pouvant avoir des formes variées en fonction du type de pain à fabriquer. Ces plateaux 80 sont superposés dans un râtelier d'alimentation 8. Ce râtelier d'alimentation 8 est amovible et monté sur roulettes 81 pour pouvoir être déplacé entre une zone de préparation des pâtons P, la machine de scarification 1, une chambre de fermentation et un four de cuisson. Pour effectuer l'opération de scarification, ce râtelier d'alimentation 8 est disposé devant la machine de scarification 1 et lié temporairement au châssis 4 par tout moyen de fixation rapide connu, automatique ou manuel, tel que par exemple une fixation magnétique entre au moins deux pattes de centrage 82, une fixation mécanique par crochet, clip ou similaire, etc. Pour assurer le centrage du râtelier d'alimentation 8 par rapport à la machine de scarification 1, cette dernière peut comporter un châssis de réception (non représenté) dans lequel le râtelier d'alimentation est inséré par coulissement à la manière d'un tiroir. Pour garantir le positionnement en hauteur du râtelier d'alimentation 8 par rapport à la machine de scarification 1, quel que soit le niveau d'usure des roulettes 81, ce châssis de réception peut comporter au niveau du sol des rampes de guidage inclinées permettant de dissocier le râtelier d'alimentation du sol et de l'amener à la hauteur requise. Tout autre moyen équivalent peut également convenir, l'essentiel étant de solidariser temporairement le râtelier d'alimentation 8 à la machine de scarification 1 en garantissant le positionnement correct de ses plateaux 80.

Les plateaux 80 constituent chacun une zone de réception R mobile par rapport au support d'outils 3 grâce à des moyens de préhension 9 détaillés plus loin, prévus pour déplacer chaque plateau 80 individuellement sous le support d'outils 3 pour effectuer la scarification des pâtons P. Il est aussi possible de prévoir une configuration inverse dans laquelle chaque plateau 50 est disposé sous le support d'outils 3 et c'est le support d'outils 3 qui est animé d'un mouvement de translation par rapport au plateau 80 pour effectuer la scarification.

Dans l'application industrielle (cf. fig. 12 et 13), la zone de réception R est constituée d'une bande transporteuse 8' sur laquelle sont déposés des plateaux alvéolés (non représentés) recevant les pâtons P à scarifier provenant d'une zone de mise en forme automatique des pâtons de pain et à destination d'une chambre de fermentation. Les plateaux et les pâtons peuvent avoir des formes variées en fonction du type de pain à fabriquer.

La machine de scarification 1 de l'invention comporte un chariot ascenseur 7 qui porte le support d'outils 3, ce chariot ascenseur 7 étant mobile en translation verticale par rapport au châssis 4 et couplé à des premiers moyens d'entraînement E1 agencés pour adapter la hauteur du support d'outils 3 par rapport à la zone de réception R des pâtons P à scarifier. Dans l'application semi-industrielle (cf. fig. 1 et 2), le chariot ascenseur 7 permet d'amener le support d'outils 3 au niveau de chaque plateau 80 superposé dans le râtelier d'alimentation 8 pour scarifier les pâtons P plateau par plateau, alors que dans l'application industrielle (cf. fig. 12 et 13), il permet de déplacer le support d'outils 3 suivant un mouvement alternatif pour que l'outil de coupe 2 suive le profil des pâtons P disposés sur la bande transporteuse 8'. Ces premiers moyens d'entraînement E1 comportent, dans l'exemple représenté, au moins un actionneur 10, tel qu'un moteur ou servomoteur, porté par le châssis 4 et couplé en rotation à une vis sans fin 11 engrenant un palier fileté 12 solidaire du chariot ascenseur 7 (cf. fig. 1 à 3, 12 et 13). Des glissières de guidage 13 dans lesquelles coulissent des rails de guidage 14 sont prévus respectivement sur le chariot ascenseur 7 et le châssis 4 pour garantir un déplacement parallèle du chariot ascenseur 7. Dans une variante non représentée, l'actionneur 10 peut être porté par le chariot ascenseur 7 et le palier fileté 12 peut être prévu sur le châssis 4. Bien entendu tout autre type d'actionneur, de transmission et/ou de guidage peut convenir. Notamment, pour améliorer le déplacement parallèle du chariot ascenseur 7, on peut prévoir deux actionneurs disposés en opposition sur le chariot ascenseur 7 et couplés à deux courroies verticales, parallèles et opposées, fixées dans la hauteur du châssis 4. Par ailleurs, le poids du chariot ascenseur 7 peut être compensé par tout système à contrepoids pour réduire les efforts sur les actionneurs.

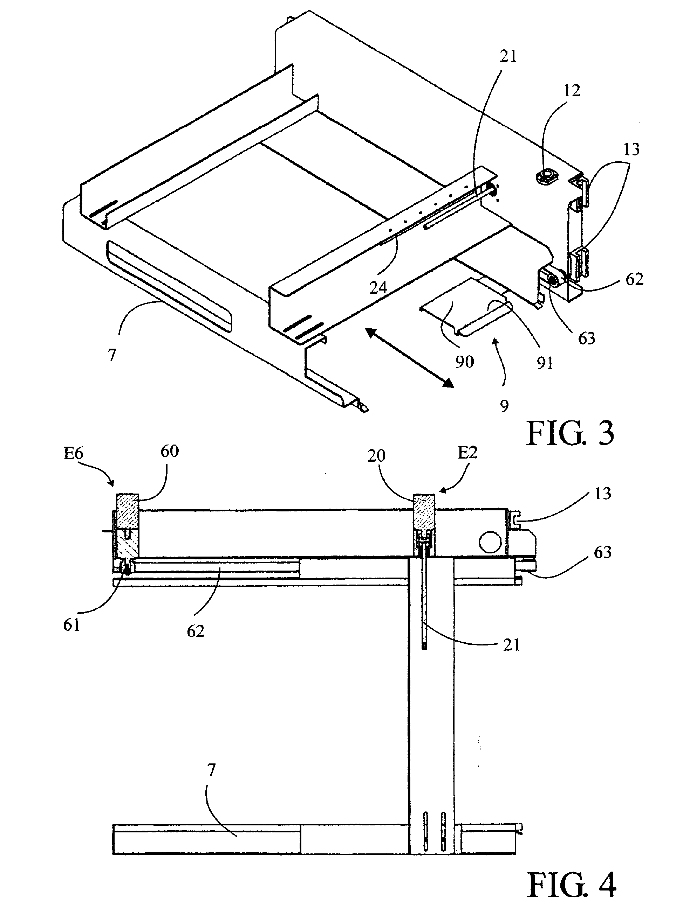

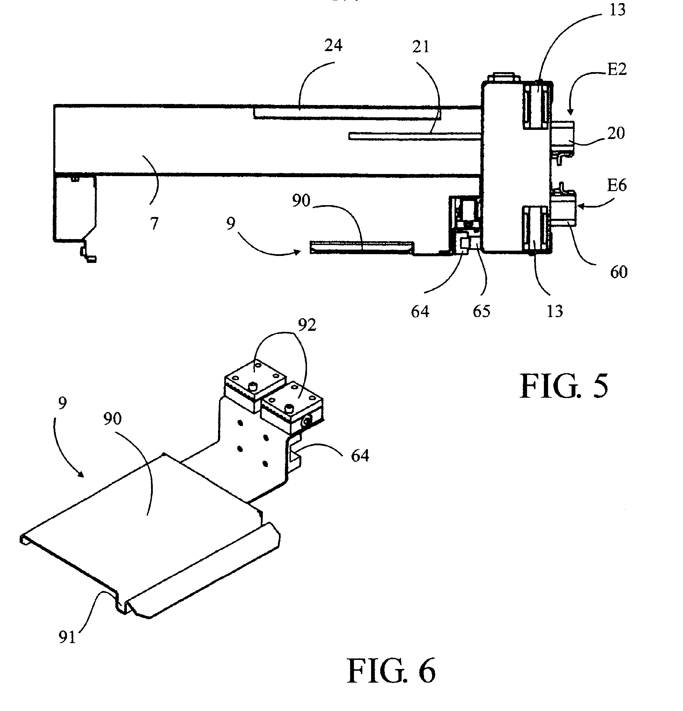

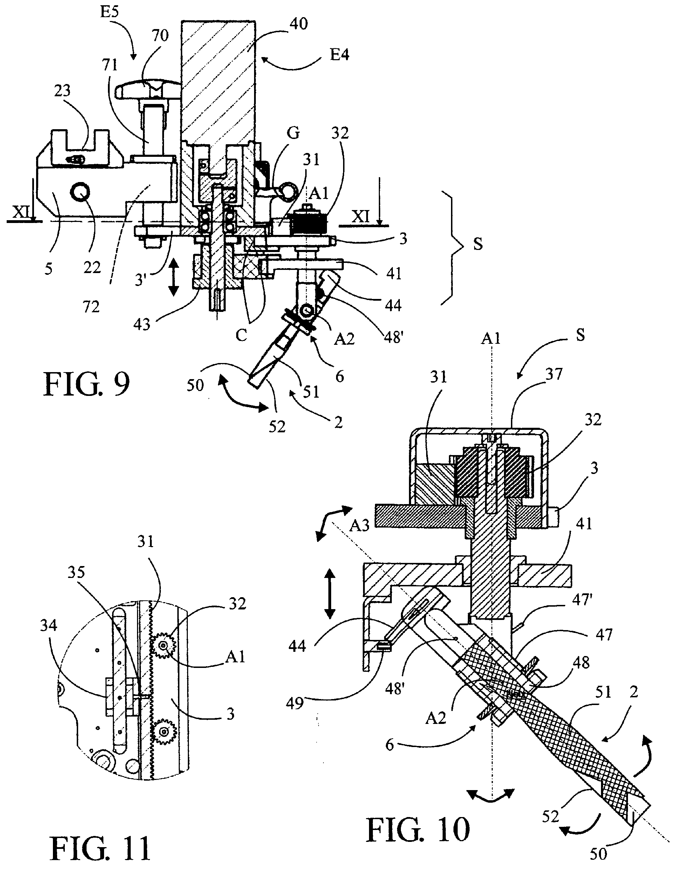

Pour pouvoir effectuer des scarifications en biais dans les pâtons P lors du déplacement relatif de la zone de réception R par rapport au support d'outils 3, la machine de scarification 1 comporte un chariot transversal 5 mobile transversalement par rapport au châssis 4 et couplé à des deuxièmes moyens d'entraînement E2 pour déplacer les outils de coupe 2 dans une direction perpendiculaire au déplacement de la zone de réception R. Ces deuxièmes moyens d'entraînement E2 comportent un deuxième actionneur 20, tel qu'un moteur ou servomoteur, porté par le chariot ascenseur 7 et couplé en rotation à une vis sans fin 21 (cf. fig. 3 à 5, 13) engrenant un palier fileté 22 prévu dans le chariot transversal 5 (cf. fig. 9 et 13). Des glissières de guidage 23 sont prévues sur le chariot transversal 5 dans lesquelles coulissent des rails de guidage 24 prévus sur le chariot ascenseur 7 pour garantir un déplacement parallèle du chariot transversal 5 (cf. fig. 5, 9). Dans une variante non représentée, l'actionneur 20 peut être porté par le chariot transversal 5 et le palier fileté 22 peut être prévu dans le chariot ascenseur 7. Bien entendu tout autre type d'actionneur, de transmission et/ou de guidage peut convenir.

La machine de scarification 1 de l'invention se distingue de l'état de la technique en ce que les outils de coupe 2 sont réglables dans plusieurs directions pour pouvoir répondre à une large gamme de types de scarification. La machine de scarification 1 permet notamment d'effectuer des scarifications en biais, droites, en chevrons, en croix simple, en croix double, etc., sur tous types de pâtons P pour réaliser tous types de pains tels que des baguettes, des pains longs, des petits pains, des miches, etc.

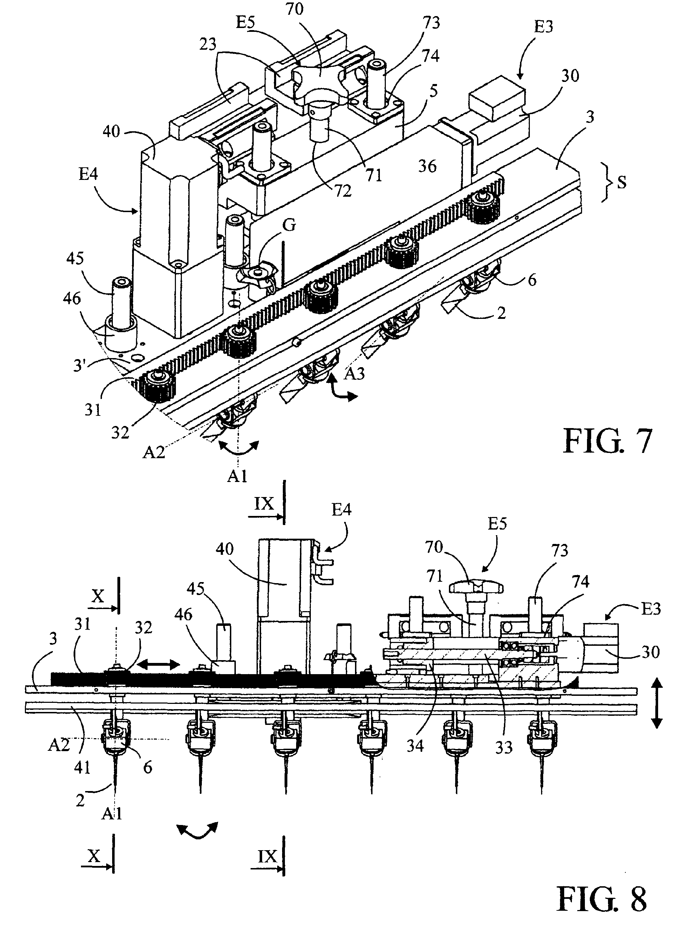

Dans ce but, les outils de coupe 2, au nombre de six dans l'exemple représenté, sont montés chacun sur un porte outil 6. Ces porte-outils 6 sont portés par le même support d'outils 3. Ils sont disposés parallèlement entre eux et distants d'un pas déterminé en fonction de l'intervalle entre deux entailles successives à effectuer dans un pâton P. Dans l'exemple représenté, le pas entre deux outils de coupe 2 est fixe. Si l'on souhaite modifier ce pas et/ou le nombre d'outils de coupe 2, il faut remplacer le support d'outils 3 par un autre support d'outils 3 adapté. A cet effet, le support d'outils 3 forme un sous-ensemble S amovible assemblé à une platine 3' par des formes d'emboîtement complémentaires C et une goupille de verrouillage G (cf. fig. 7, 9 et 10). En variante, on peut aussi prévoir de pouvoir modifier ce pas en gardant le même support d'outils 3 par des moyens de réglage appropriés. Le sous-ensemble S portant les outils de coupe 2 est également conçu pour pouvoir se monter sur toute machine de scarification industrielle, en remplacement des outils standards non réglables, dans le but de faire évoluer le parc machines existant.

Ces porte-outils 6 sont mobiles en rotation par rapport au support d'outils 3 autour d'un premier axe de rotation A1 perpendiculaire au support d'outils 3 et à la zone de réception R des pâtons P. Ils sont couplés à des troisièmes moyens d'entraînement E3 agencés pour modifier l'angle de coupe des outils de coupe 2 par rapport aux pâtons P. Ces troisièmes moyens d'entraînement E3 comportent, dans l'exemple représenté, un troisième actionneur 30 couplé en translation à une crémaillère 31 engrenant un pignon 32 solidaire de chaque porte-outil 6 (cf. fig. 7 et 8). Cet actionneur 30 peut être un moteur électrique ou un servomoteur entraînant en rotation une vis sans fin 33 engrenant un écrou 34 (cf. fig. 8) couplé à la crémaillère 31 par une goupille 35 (cf. fig. 11). La vis sans fin 33 et l'écrou 34 sont enfermés dans un carter de protection 36 (cf. fig. 7). De même, la crémaillère 31 et les pignons 32 sont enfermés dans un autre carter de protection 37 (cf. fig. 10). Bien entendu tout autre type d'actionneur, de transmission et/ou de guidage peut convenir.

Les porte-outils 6 sont avantageusement mobiles en rotation par rapport au support d'outils 3 autour d'un deuxième axe de rotation A2 perpendiculaire et sécant au premier axe de rotation A1 et parallèle à la zone de réception R des pâtons P. Ils sont couplés à des quatrièmes moyens d'entraînement E4 agencés pour modifier l'inclinaison des outils de coupe 2 par rapport aux pâtons P dans le but de modifier la profondeur de coupe. Ces quatrièmes moyens d'entraînement E4 comportent un quatrième actionneur 40 couplé en translation à un organe de réglage 41 agencé pour appliquer un couple de rotation sur chaque porte-outil 6 autour du deuxième axe de rotation A2. Cet actionneur 40 peut être un moteur électrique ou un servomoteur entraînant en rotation une vis sans fin 42 engrenant un écrou 43 (cf. fig. 9) en prise avec l'organe de réglage 41. L'organe de réglage 41 comporte une plaque d'appui en contact avec un talon 44 prévu à l'extrémité haute du porte-outil 6 (cf. fig. 10). Des colonnes de guidage 45 sur lesquelles coulissent des paliers de guidage 46 sont prévus respectivement sur l'organe de réglage 41 et la platine 3' pour garantir un déplacement parallèle de l'organe de régale 41. Bien entendu tout autre type d'actionneur, de transmission et/ou de guidage peut convenir.

Les outils de coupe 2 peuvent être également mobiles en rotation autour de leur axe central A3 passant par le deuxième axe de rotation A2 dans le but de pouvoir modifier leur angle d'attaque, comme dans la variante illustrée à la figure 10. Dans cet exemple, chaque porte-outil 6 comporte un manchon 47 recevant une douille 48 libre en rotation autour de l'axe A3 et portant l'outil de coupe 2. Le réglage de l'angle d'attaque de chaque outil de coupe 2 est obtenu en faisant pivoter les porte-outils 6 autour du premier axe de rotation A1 au moyen de l'actionneur 30 (E3) pour amener la partie excentrée du talon 44 prévu à l'extrémité de la douille 48 en contact avec une came 49 prévue sur l'organe de réglage 41 qui provoque la rotation de l'outil de coupe 2 autour de son axe central A3. Pour obtenir ce résultat, il est nécessaire que le talon 44 soit toujours en contact avec l'organe de réglage 41, ce qui est assuré par un organe ressort 47' qui assujettit la douille 47 autour de l'axe A2 en direction de cet organe de réglage 41. Une fois l'angle d'attaque des outils de coupe 2 réglé, il ne se dérègle plus et les outils de coupe 2 peuvent être replacés dans leur position initiale au moyen de l'actionneur 30 (E3). Bien entendu, tout autre moyen de réglage et/ou de rappel peut convenir.

Le support d'outils 3 est, par ailleurs, réglable en hauteur par rapport à la zone de réception R pour ajuster la position des outils de coupe 2 par rapport aux pâtons P à scarifier. A cet effet, le support d'outils 3 est mobile en translation verticale par rapport au chariot transversal 5 et comporte des cinquièmes moyens d'entraînement E5. Dans l'application semi-industrielle (cf. fig. 1 et 2), ils sont manuels et comportent une molette 70 pourvue d'une tige filetée 71 vissée dans un écrou 72 du chariot transversal 5, l'extrémité de la tige filetée 71 étant en prise avec la platine 3' (cf. fig. 9). Dans l'application industrielle (cf. fig. 12 et 13), ils sont motorisés et comportent un actionneur 70' à la place de la molette 70. Le chariot transversal 5 comporte des paliers de guidage 74 verticaux dans lesquelles coulissent des colonnes de guidage 73 solidaires de la platine 3' pour garantir un déplacement parallèle du support d'outils 3 (cf. fig. 7). Bien entendu tout autre type d'actionneur, de transmission et/ou de guidage peut convenir.

Dans l'application semi-industrielle (cf. fig. 1 et 2), la machine de scarification 1 comporte des moyens de préhension 9 embarqués sur le chariot ascenseur 7 pour déplacer chaque plateau 80 individuellement sous le support d'outils 3. Dans l'exemple représenté, ces moyens de préhension 9 comportent un organe de préhension 90 (cf. fig. 3, 5, 6) pourvu d'un crochet 91 apte à s'accrocher par le dessous du plateau 80 et couplé à des sixièmes moyens d'entraînement E6 pour le déplacer en translation horizontale par rapport au support d'outils 3 entre une position rentrée dans laquelle le plateau 80 est dans le râtelier d'alimentation 8 et une position sortie dans laquelle le plateau 80 est au moins en partie dans la machine de scarification 1, extrait du râtelier 8 à la manière d'un tiroir, et déplacé sous le support d'outils 3 pour effectuer la scarification. Les sixièmes moyens d'entraînement E6 comportent, dans l'exemple représenté, au moins un sixième actionneur 60, tel qu'un moteur ou un servomoteur, couplé en rotation à un premier pignon 61 entraînant une courroie 62 autour d'un second pignon 63 et sur laquelle est fixé l'organe de préhension 90 par des plots de fixation 92. L'organe de préhension 90 est guidé en translation horizontale par un rail 65 et une glissière 64 prévus respectivement sur le chariot ascenseur 7 et sur l'organe de préhension 90. Bien entendu tout autre type d'actionneur, de transmission et/ou de guidage peut convenir. Notamment pour garantir le déplacement parallèle du plateau 80 sous le support d'outils 3, l'organe de préhension 90 peut être doublé ou s'étendre sur toute la largeur du chariot ascenseur 7 pour être entrainé et guidé simultanément de l'autre côté du chariot ascenseur 7 par une deuxième courroie et un deuxième rail. Le crochet 91 peut être réalisé par tout autre moyen et comporté un organe de rappel permettant un accrochage automatique de l'organe de préhension 90 au dessous du plateau 80 et/ou son décrochage automatique.

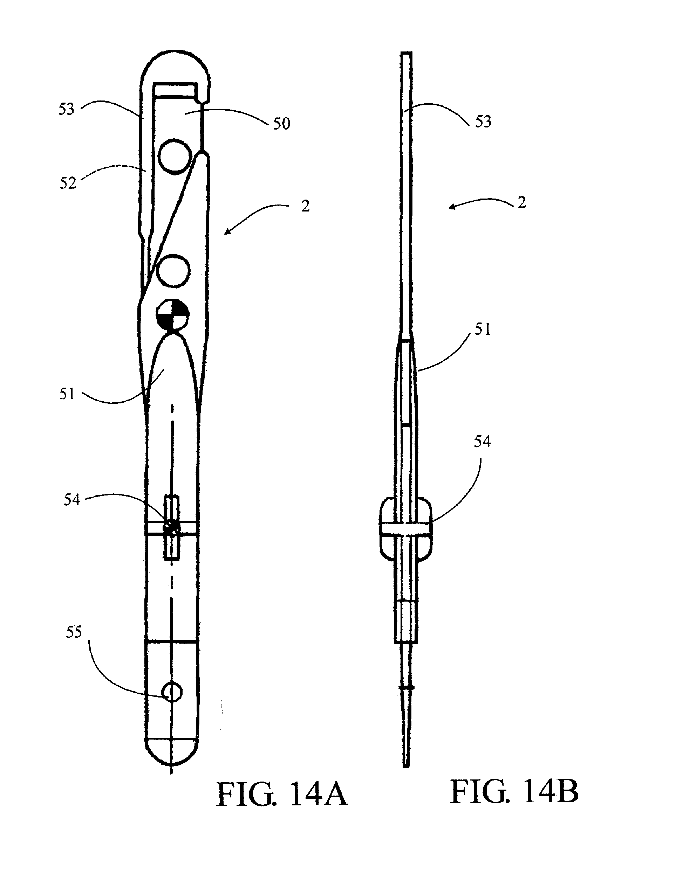

Un exemple d'outil de coupe 2 est représenté en détail aux figures 14A et 14B, étant précisé qu'il est possible d'équiper la machine de scarification 1 selon l'invention avec tout autre type d'outils de coupe à lame fixe, la lame étant droite ou biseautée, à roulette, à jet d'eau, à jet de vapeur, à laser, etc. Cet outil de coupe 2 comporte une lame de coupe 50 portée par un manche 51 de préférence surmoulé autour de la lame de coupe 50 pour ne laisser apparente qu'une partie utile du tranchant 52 de la lame de coupe 50 (cf. fig. 9 et 10). Cette partie utile du tranchant 52 est protégée par un capuchon 53 également surmoulé autour de la lame de coupe 50 et raccordé au manche 51 par une zone de rupture de plus faible épaisseur. Cet outil de coupe 2 est conçu pour être jetable et facilement interchangeable par simple emboîtement dans le porte-outil 6. Son manche 51 comporte à cet effet un organe de centrage 54 en forme de croix qui coopère avec la douille 48 du porte-outil 6 et un trou de clippage 55 qui coopère avec un système de blocage 48' du porte-outil 6 (cf. fig. 9 et 10), ce système de blocage 48' pouvant être à bille ou à téton sollicité par un organe de rappel, ou tout moyen équivalent, pouvant être déverrouillé automatiquement ou de préférence manuellement pour éviter tout déverrouillage accidentel. Bien entendu, toute autre variante de réalisation est possible, l'essentiel étant de pouvoir changer les outils de coupe 2 rapidement et de préférence sans outillage. Ces outils de coupe 2 peuvent être combinés à un système de lubrification par jet d'eau, vaporisation, pulvérisation ou autre au moyen de buses disposées dans l'environnement proche des lames de coupe.

Les différents actionneurs 10, 20, 30, 40, 70' et 60 correspondants respectivement aux moyens d'entraînement E1, E2, E3, E4, E5 et E6 sont pilotés par une unité de commande programmable disposée dans une armoire de commande 15 (cf. fig. 1 et 2) et permettant de programmer à souhait l'orientation des outils de coupe 2, les mouvements et/ou la trajectoire des outils de coupe 2 en fonction des paramètres de scarification, tels que la forme, l'inclinaison, la profondeur des entailles, déterminés en fonction du type de pain à scarifier, autorisant ainsi une variété importante de types de scarification (nombre, longueur, orientation, etc.). Il est bien évidemment possible de mémoriser les réglages correspondant aux paramètres de scarification pour chaque type de pain. L'unité de commande étant programmable elle permet de piloter certains actionneurs de manière combinée ou simultanée, par exemple pour que les outils de coupe 2 suivent une trajectoire à une, deux, voire trois dimensions, cette trajectoire étant déterminée par les paramètres de scarification prédéterminés. Tout type de capteurs peut être ajouté pour déclencher les différents déplacements en fonction de la présence ou non des pâtons, de la hauteur des pâtons, de la position des plateaux 80, etc. Dans l'application industrielle, l'unité de commande peut piloter simultanément les actionneurs 10 (E1) et 20 (E2) pour que la trajectoire des outils de coupe 2 épouse le profil des pâtons P à scarifier. Si l'on souhaite effectuer des entailles sinusoïdales, l'unité de commande peut piloter en va et vient l'actionneur 30 (E3). Pour effectuer des entailles droites parallèles au déplacement de la zone de réception R des pâtons P à scarifier, seul l'actionneur 70' (E5) ou l'actionneur 10 (E1) est piloté pour créer des entailles successives et discontinues. Pour réaliser des entailles droites perpendiculaires au déplacement de la zone de réception R des pâtons P, seul l'actionneur 20 (E2) est piloté et la bande transporteuse 8' ou le plateau 80 s'arrête momentanément. Si la longueur de ces entailles droites dépasse la course du chariot transversal 5, il sera préférable de monter le support d'outils 3 sur le châssis 4 tourné de 90° afin de pouvoir augmenter cette course.

Il ressort clairement de cette description que l'invention permet d'atteindre les buts fixés, à savoir une machine de scarification automatique, performante, facilement configurable et polyvalente par simple programmation.

La présente invention n'est pas limitée aux exemples de réalisation décrits mais s'étend à toute modification et variante évidentes pour un homme du métier tout en restant dans l'étendue de la protection définie dans les revendications annexées.

## Revendications

1. Machine de scarification (1) de pâtons de pain ou similaires, comportant au moins un outil de coupe (2) porté par un support d'outils (3) disposé sur un châssis (4) au dessus d'une zone de réception (R) d'au moins un pâton (P) à scarifier, l'un au moins dudit support ou de ladite zone étant déplacé par rapport à l'autre pour effectuer la scarification dudit pâton, ledit outil de coupe (2) étant porté par un porte-outil (6), lequel est mobile en rotation par rapport audit support d'outils (3) autour d'un premier axe de rotation (A1) perpendiculaire à ladite zone de réception (R) et couplé à des troisièmes moyens d'entraînement (E3) agencés pour modifier l'angle de coupe dudit outil de coupe (2) par rapport au pâton (P) à scarifier disposé sur ladite zone de réception (R), **caractérisée en ce que** ledit porte-outil (6) est mobile en rotation par rapport audit support d'outils (3) autour d'un deuxième axe de rotation (A2) parallèle à ladite zone de réception (R), sécant audit premier axe de rotation (A1), et couplé à des quatrièmes moyens d'entraînement (E4) agencés pour modifier l'inclinaison dudit outil de coupe (2) par rapport audit pâton (P) à scarifier disposé sur ladite zone de réception (R).

2. Machine selon la revendication 1, **caractérisée en ce que** ladite zone de réception (R) est constituée d'au moins un plateau (80) portant lesdits pâtons (P) à scarifier.

3. Machine selon la revendication 2, **caractérisée en ce qu'**elle comporte au moins un râtelier d'alimentation (8) disposé devant ledit châssis (4) et portant plusieurs plateaux (80) superposés, et **en ce qu'**elle comporte également des moyens de préhension (9) pour déplacer chaque plateau (80) individuellement dudit râtelier d'alimentation (8) sous ledit support d'outils (3) pour effectuer la scarification desdits pâtons (P).

4. Machine selon la revendication 1, **caractérisée en ce que** ladite zone de réception (R) est constituée d'au moins une bande transporteuse (8') portant lesdits pâtons (P) à scarifier et traversant ladite machine (1) sous ledit support d'outils (3) pour effectuer la scarification desdits pâtons.

5. Machine selon l'une quelconque des revendications précédentes, **caractérisée en ce que** ledit support d'outils (3) est mobile en translation verticale par rapport audit châssis (4) et couplé à des premiers moyens d'entraînement (E1) agencés pour déplacer ledit support d'outils (3) en hauteur par rapport à ladite zone de réception (R) des pâtons à scarifier.

6. Machine selon la revendication 5, **caractérisée en ce qu'**elle comporte un chariot ascenseur (7) portant ledit support d'outils (3) et **en ce que** lesdits premiers moyens d'entraînement (E1) comportent au moins un actionneur (10) porté par ledit châssis (4) ou ledit chariot ascenseur (7) et couplé en rotation à une vis sans fin (11) engrenant un palier fileté (12) solidaire dudit chariot ascenseur (7) ou dudit châssis (4), l'extrémité de ladite vis sans fin étant en prise avec ledit support d'outils (3).

7. Machine selon la revendication 6, **caractérisée en ce qu'**elle comporte un chariot transversal (5) monté sur le chariot ascenseur (7) et portant ledit support d'outils (3), mobile transversalement par rapport audit châssis (4) et couplé à des deuxièmes moyens d'entraînement (E2) pour déplacer ledit outil de coupe (2) perpendiculairement au déplacement relatif de ladite zone de réception (R).

8. Machine selon la revendication 7, **caractérisée en ce que** lesdits deuxièmes moyens d'entraînement (E2) comportent un deuxième actionneur (20) porté par ledit chariot ascenseur (7) ou ledit chariot transversal (5) et couplé en rotation avec une vis sans fin (21) engrenant un palier fileté (22) solidaire dudit chariot transversal (5) ou dudit chariot ascenseur (7).

9. Machine selon la revendication 1, **caractérisée en ce qu'**elle comporte plusieurs outils de coupe (2), chacun monté sur un porte-outil (6) et **en ce que** lesdits troisièmes et/ou quatrièmes moyens d'entraînement (E3, E4) sont communs auxdits porte-outils (6).

10. Machine selon la revendication 9, **caractérisée en ce que** lesdits porte-outils (6) sont disposés parallèlement entre eux et distants d'un pas prédéterminé.

11. Machine selon la revendication 9, **caractérisée en ce que** lesdits troisièmes moyens d'entraînement (E3) comportent au moins un troisième actionneur (30) porté par le support d'outils (3) et couplé en translation à une crémaillère (31) engrenant un pignon (32) solidaire de chaque porte-outil (6).

12. Machine selon la revendication 9, **caractérisée en ce que** lesdits quatrièmes moyens d'entraînement (E4) comportent au moins un quatrième actionneur (40) porté par ledit support d'outils (3) et couplé en translation à un organe de réglage (41) agencé pour appliquer un couple de rotation sur chaque porte-outil (6).

13. Machine selon la revendication 12, **caractérisée en ce que** lesdits outils de coupe (2) sont mobiles en rotation autour de leur axe central (A3) passant par le deuxième axe de rotation (A2), chaque outil de coupe étant monté dans une douille (48) libre en rotation dans un manchon (47) du porte-outil (6), ladite douille comportant un talon (44) excentré agencé pour coopérer avec une came (49) solidaire dudit organe de réglage (41) dans une position extrême des troisièmes moyens d'entraînement (E3).

14. Machine selon la revendication 7, **caractérisée en ce que** ledit support d'outils (3) est mobile en translation verticale par rapport au chariot transversal (5) et couplé à des cinquièmes moyens d'entraînement (E5) agencés pour modifier la hauteur desdits outils de coupe (2) par rapport à ladite zone de réception (R) des pâtons à scarifier.

15. Machine selon la revendication 3, **caractérisée en ce que** les moyens de préhension (9) comportent au moins un organe de préhension (90) mobile en translation horizontale par rapport audit chariot ascenseur (7) et couplé à des sixièmes moyens d'entraînement (E6) agencés pour déplacer chaque plateau (80) individuellement entre une position rentrée dans laquelle il est dans le râtelier d'alimentation (8) et une position sortie dans laquelle il est dans la machine de scarification (1) et inversement.

16. Machine selon la revendication 15, **caractérisée en ce que** les sixièmes moyens d'entraînement (E6) comportent au moins un sixième actionneur (60) porté par ledit chariot ascenseur (7), couplé en rotation avec un premier pignon (61) entraînant une courroie (62) autour d'un second pignon (63) et sur laquelle est fixé ledit organe de préhension (90).

17. Machine selon l'une quelconque des revendications précédentes, **caractérisée en ce que** les actionneurs desdits moyens d'entraînement (E1, E2, E3, E4, E5 et E6) sont pilotés par une unité de commande programmable.
